# EUROPÄISCHE PATENTSCHRIFT

(11) **EP 2 829 252 B1**
(45) Veröffentlichungstag und Bekanntmachung des Hinweises auf die Patenterteilung: **26.09.2018**
(21) Anmeldenummer: 13177641.1
(22) Anmeldetag: 23.07.2013
(51) Int. Cl.: A61C 13/15

(54) **Lichthärtgerät für Dentalrestaurationsmaterialien**
Light curing device for dental restoration materials
Appareil de durcissement à la lumière pour matériaux de restauration dentaire

(43) Veröffentlichungstag der Anmeldung: 28.01.2015
(60) Teilanmeldung: 17203563.6
(73) Patentinhaber: Ivoclar Vivadent AG, 9494 Schaan (LI)
(72) Erfinder: Benz, Oliver, 9487 Gamprin (LI)
(74) Vertreter: Baronetzky, Klaus

(56) Entgegenhaltungen:
- WO-A1-2004/002361
- WO-A1-2009/052016
- US-A- 6 008 264
- US-A1- 2005 003 323
- US-A1- 2010 140 450
- US-B1- 8 106 600

## Beschreibung

Die Erfindung betrifft ein Lichthärtgerät für Dentalrestaurationsmaterialien, gemäß dem Oberbegriff von Anspruch 1.

Lichthärtgeräte werden typischerweise mit vorgegebenen Belichtungszeiten betrieben, während derer eine Polymerisation der zu polymerisierenden Dentalmaterialien stattfindet.

Die Belichtungszeit wurde typischerweise als entscheidend angesehen, um zu gewährleisten, dass das vorher an der Restaurationsstelle aufgebrachte bzw. eingebrachte Dentalmaterial ausreichend durchgehärtet wird, jedoch ohne spröde zu werden.

Polymerisierbare Dentalmaterialien können sowohl durch Lichthärtung als auch durch Wärmehärtung als auch durch Kombinationen dieser ausgehärtet werden. Bei der Entwicklung derartiger Dentalmaterialien ist man bemüht gewesen, für eine möglichst gleichmäßige Durchhärtung zu sorgen. In dem Bestreben, eine Vergleichsmäßigung zu erzielen, hat man auch lange Härtzeiten in Kauf genommen, die tatsächlich Anfang der Neunziger Jahre mit den seinerzeit häufig verwendetetn Halogenlampen keine schlechten Ergebnisse erbrachten, jedoch für den Patienten unangenehme lange Behandlungszeiten erforderten.

Um die Durchhärtung besser zu steuern, aber auch um die Belästigung des Patienten zu minimieren, wurden Ende der Neunziger Jahre Vorhärtprozesse entwickelt, wie es beispielsweise aus der EP 1 046 381 A1 ersichtlich ist. Derartige Vorhärtprozesse erlaubten es, die Haupthärtzeit zu verkürzen. Überraschenderweise ergab sich jedoch in manchen Fällen, dass eine Verkürzung der Haupthärtzeit nicht möglich war, ohne zu riskieren, dass die Durchhärtung nicht vollständig war. Eine nicht vollständige Durchhärtung beschwört andererseits die Gefahr herauf, dass freie Radikale vorhanden sind, deren cancerogene Wirkung derzeit noch nicht ausgeschlossen ist.

US 2005/0003323 A1 offenbart ein Lichthärtgerät mit einer Kamera.

Bekanntlich neigen lichthärtende Dentalmaterialien wie Polymethylmethacrylat in einem - wenn auch geringem Umfang - auch dazu, beim Lichthärten ihr Volumen zu verringern, also zu schrumpfen. Um zu verhindern, dass durch die Schrumpfung des Dentalmaterials Randspalten entstehen, hat man versucht, der Schrumpfung dahingehend entgegenzuwirken, dass zunächst die tief liegenden Schichten des Dentalmaterials ausgehärtet werden, dann die darauffolgenden, und schließlich die Deckschichten.

Eine derartige Härtung ist aber praktisch nur durch schichtweise Härtung der Dentalmaterialien möglich, was entsprechend zeit- und arbeitsaufwendig ist.

Ferner ist es bereits vorgeschlagen worden, bei Lichthärtgeräten eine fest vorgegebene Leistungsabfolge vorzusehen, beispielsweise eine Einschaltung des Lichthärtgeräts mit reduzierter Leistung, dann eine Zeitdauer ohne Leistung und dann eine Zeitdauer mit voller Leistung. Mit dieser Lösung sollte die Randspaltenbildung reduziert werden. Diese Lösung eignet sich jedoch nur für Dentalrestaurationen recht geringer Tiefe, denn durch die Lichthärtung mit reduzierter Leistung wird im Grunde hauptsächlich die Oberfläche der Dentalrestauration gehärtet, während die Lichtabgabe mit hoher Leistung auch in tiefere Schichten der Dentalrestauration eindringt. Insofern hat diese feste Abfolge eher einen ungünstigen Effekt.

In den 2000er Jahren nahm die Lichtleistung von LED-Chips signifikant zu, und es wurden insbesondere Leuchtdioden entwickelt, deren Emissionsmaximum mit dem spektralen Empfindlichkeitsmaximum von Campherchinon, dem bevorzugten Photoinitiator für PMMA, zusammenfiel oder zumindest nur in geringem Maße abwich. Dies ermöglichte eine drastische Reduktion der erforderlichen Zeit für einen Polymerisationszylklus. Aufgrund der zunehmenden Leistung wurde jedoch zugleich die Überhärtung kritischer, so dass die Hersteller von Dentalgeräten dazu übergegangen sind, feste Zeiten für die Polymerisation vorzugeben, also beispielsweise 5,10 oder 15 Sekunden, mit der Maßgabe, je nach Größe der Dentalrestauration die entsprechende Einstellung vorzunehmen.

Gemäß der US 8,106,600 B1 ist ein Lichthärtgerät mit einer einzigen Multi-Wellenlängen-LED bekannt. Ein solches Lichthärtgerät ist durch eine in sich geschlossene Quelle betrieben, so daß das Gerät tragbar ist. Außerdem ist das Gerät leicht, so dass es während der empfindlichen Verfahren leicht handzuhaben ist. Bei praktischer Handlung ist jedoch nach Abschluss der Vorhärtung der Dentalrestauration üblich eine visuelle Kontrolle und gegebenfalls eine Nacharbeitung/Anpassung vorzunehmen, während derer das Dentalrestaurationsmaterial gegebenfalls auch abkühlen kann. Dieses Gerät zieht diesen Faktor nicht in Betracht.

Gemäß der WO 2009/052016 A1 ist eine lichtemittierende Vorrichtung zum Aushärten der Dentalmaterialien bekannt. Die Vorrichtung ermöglicht eine Bedienung durch den Benutzer und ein verbessertes Aushärten der Dentalmaterialien. Wenn sich allerdings die Lichtabgabe der Lichtquelle verändert, zeigt bzw. signaliziert dies diese Vorrichtung nicht. Eine versehentliche Fehlbehandlung ist daher kaum merkbar.

Gemäß der US 6,008,264 sind ein Verfahren und ein System zum Aushärten polymerer Materialien wie Dentalkomposit offenbart. Vorzugsweise wird moduliertes Licht verwendet, um die Bildung der Polymerketten in dem Polymermaterial zu steuern, so dass ein ausgehärtetes Polymermaterial für dessen vorgesehene Funktion die gewünschten physikalischen Eigenschaften hat. Jedoch ist es nicht möglich, genau die erforderliche Lichtabgabemenge für ein bestimmtes Polymermaterial zu bestimmen.

Demgegenüber liegt der Erfindung die Aufgabe zugrunde, ein Lichhärtgerät für Dentalrestaurationsmaterialien zu schaffen, das eine verbesserte Möglichkeit der Anpassung gerade auch bei großen und tiefen Dentalrestaurationen ermöglicht.

Diese Aufgabe wird erfindungsgemäß durch Anspruch 1 gelöst. Vorteilhafte Weiterbildungen ergeben sich aus den Unteransprüchen.

Erfindungsgemäß besonders günstig ist es, dass das neue Lichthärtgerät eine Steuerung einer reduzierten Dosis von Licht nach Wahl des Benutzers ermöglicht. Überraschend ergibt sich durch die Steuerung der Dosis eine wesentlich bessere Kontrolle über den Grad der Vorhärtung als bei einer reinen Leistungssteuerung - oder aber einer reinen Zeitsteuerung -. Dies ermöglicht es, dass der Zahnarzt - oder gegebenenfalls der Zahntechniker - an dem Dentalrestaurationsteil noch weitere Anpassungen vornimmt, nachdem es zunächst bereits durch das Vorhärten etwas viskoser gemacht ist.

Die Einstellung der Dosis für das Vorhärten lässt sich in weiten Bereichen vorab an die Erfordernisse anpassen. So kann beispielsweise eine recht kurze Vorhärtzeit mit einer recht hohen Vorhärtleistung kombiniert werden, wenn es gilt, recht große und tiefliegende Dentalrestaurationen vorzuhärten.

Durch die Anpassung lässt sich der Härtegradient über die Tiefe der Dentalrestauration in weiten Bereichen an die Erfordernisse anpassen.

Erfindungsgemäß bevorzugt ist es in diesem Zusammenhang, wenn die Härte an der Basis der Dentalrestauration 80% oder mehr der Härte an der Oberfläche beträgt. Bevorzugt wird insofern bei tiefen Dentalrestaurationen mit einer vergleichsweise kurzen Vorhärtzeit - und dementsprechend hohen Leistung - gearbeitet, während flache Dentalrestaurationen demgegenüber besser mit einer längeren Vorhärtzeit und dementsprechend geringeren Leistung vorgehärtet werden.

Besonders günstig ist es, dass der Vorhärtzyklus unabhängig von dem Haupthärtzyklus ist. Der Benutzer kann dann zunächst zu einem beliebigen, von ihm gewählten Zeitpunkt, die Vorhärtung vornehmen. Bei mehreren zu bearbeitenden Dentalrestaurationen kann er auch nacheinander diese vorhärten und nach Abschluss der Vorhärtung für alle Dentalrestaurationen das Lichthärtgerät ablegen und dann eine visuelle Kontrolle vornehmen und gegebenenfalls die erwünschten Nacharbeitungen oder Anpassungen vornehmen. Durch erneutes Andrücken der Dentalrestaurationen lassen sich auch gut die minimalen Schrumpfungen des Dentalrestaurationsmaterials während der Vorhärtzeit kompensieren.

Demnach wird gezielt eine beliebig lange Pausenzeit eingeschaltet, während derer das Dentalrestaurationsmaterial gegebenenfalls auch abkühlen kann. In dieser Zeit lassen sich beispielsweise auch automatische Kontrollen durchführen, beispielsweise auch mit einer Digitalcamera, die die vorgehärtete Dentalrestauration erfaßt und eine Bilderkennung vornimmt, um gegebenenfalls ein Nacharbeiten zu ermöglichen.

Zu einem beliebigen Zeitpunkt lässt sich dann die Haupthärtzeit anschließen, wobei es bevorzugt ist, dass das Lichthärtgerät dann in einen Haupthärtmodus umgeschaltet wird. Bevorzugt verbleibt das Lichthärtgerät also im Vorhärtmodus - auch wenn es zwischenzeitlich abgelegt wird und im Ruhezustand ist -, bis der Benutzer durch ein weitere Auslöseelement oder eine erneute Betätigung des Vorhärtmodus-Auslöseelements explizit den Haupthärtmodus einschaltet.

In vorteilhafter Ausgestaltung der Erfindung ist es vorgesehen, die reduzierte Dosis signalisieren zu lassen. Dies kann in beliebiger geeigneter Weise erfolgen, beispielsweise durch eine Änderung der Lichtfarbe, ein Blinken der Lichtquelle, ein wiederholtes Ein- und Ausschalten im Sinne einer gepulsten Vorhärt-Lichtabgabe oder beispielsweise durch eine zusätzliche Leuchtdiode, die den Vorhärtmodus symbolisiert.

In vorteilhafter Ausgestaltung ist es vorgesehen, das Dentalrestaurationsmaterial in Schichten zur Bildung der fertigen Dentalrestauration aufzubringen. Diese Ausgestaltung ist insbesondere dann sinnvoll, wenn die Tiefe der Dentalrestauration mehr als 2mm beträgt. Bevorzugt lässt sich dann die erste Schicht in einer Schichtstärke von beispielsweise 1mm auftragen und vorhärten.

Durch das Vorhärten wird die Schicht aus einem flüssigen Aggregatzustand in einen zäh-viskosen Aggregatzustand überführt, in der sie im Grunde formtreu bleibt. Nach visueller Kontrolle wird dann gegebenenfalls ein erneutes Andrücken vorgenommen und die zweite Schicht aufgetragen. Die zäh-viskose erste Schicht verbindet sich dass besonders gut mit der zweiten Schicht. Gegebenenfalls wird dann erneut ein Vorhärtschritt vorgenommen, um eine optimale Formanpassung zu gewährleisten.

Beim Haupthärten wird durch die hohe Leistung dann die tiefliegende Schicht ohne weitere erreicht und zusammen mit der Deckschicht durchgehärtet.

Dieses Durchhärten lässt sich auch mit einem Modus mit erhöhter Leistung realisieren, bei welchem das Lichthärtgerät eine Leistung zwischen 5 und 20 Watt/cm² abgibt und insofern durch sehr hohe Leistung gepaart mit einer entsprechend verkürzten Einschaltzeit die erforderliche Dosis für das Durchhärten bereitstellt.

In weiterer vorteilhafter Ausgestaltung ist es vorgesehen, die erfindungsgemäß reduzierte Dosis so zu wählen, dass sie das Dentalrestaurationsmaterial viskos macht, insbesondere zähviskos. In diesem Zustand lässt sich das Dentalrestaurationsmaterial gut modellieren, ähnlich einer Knetmasse, so dass die Formgebung wesentlich erleichtert ist.

Erfindungsgemäß besonders günstig ist daher ein Modellierschritt, der zwischengeschaltet wird, so dass die Abfolge erfindungsgemäß lautet: Vorhärtschritt - Modellierschritt - Haupthärtschritt. In Abwandlung hiervon lassen sich beliebige Vorhärtschritte mit Modellierschritten bei mehreren Schichten kombinieren, und es ist auch möglich, das Modellieren mehrerer nacheinander vorgehärteter Dentalrestaurationen in einem Zuge, also als kombinierter Modellierschritt vorzunehmen, so dass mehrere nebeneinanderliegende Dentalrestaurationen in einem Zuge, also ohne dass zwischenzeitlich ein Lichthärtgerät in die Hand genommen werden muss, modelliert werden können.

In weiterer vorteilhafter Ausgestaltung ist der Vorhärtmodus mit einer langwelligeren Lichtabgabe verbunden, deren spektrales Maximum beispielsweise bei 520nm liegen kann. Eine derartige Lichtabgabe ist optisch von der blauen Lichtabgabe im Haupthärtmodus unterscheidbar, aber es wird genügend Energie im spektralen Empfindlichkeitsmaximum von Campherchinon (470nm) bereitgestellt, um die erwünschte Vorhärtung zu gewährleisten.

### [Hieran schließen sich die Vorteile der Unteransprüche an]

Weitere Vorteile, Einzelheiten und Merkmale ergeben sich aus der nachfolgenden Beschreibung eines Ausführungsbeispiels anhand der Zeichnung.

Es zeigen:
- Fig.1: ein erfindungsgemäßes Lichthärtgerät in einer Ausführungsform;
- Fig.2: eine Dentalrestauration in einer Ausführungsform; und
- Fig.3: eine schematische Darstellung der verwendeten Wellenlängen für das Lichthärt gerät und die Dentalrestauration gemäß der Erfindung.

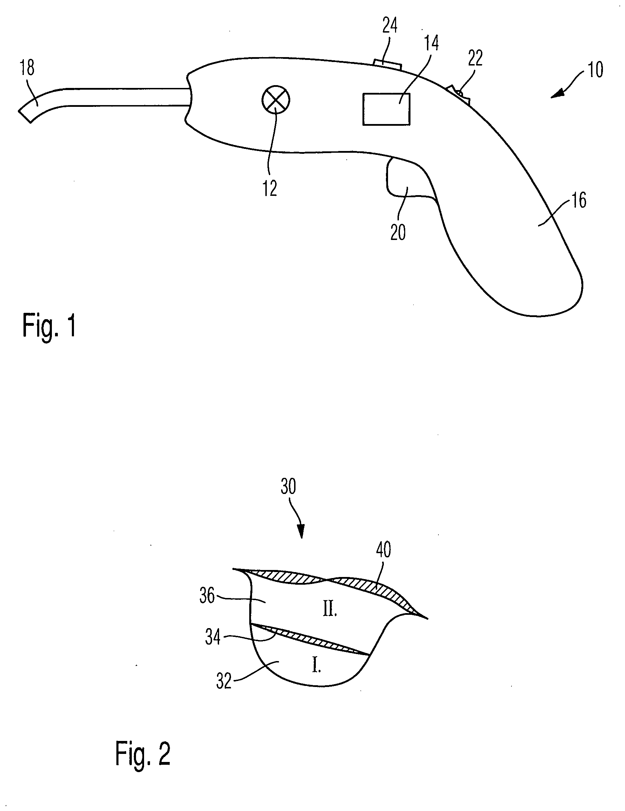

Das in Fig.1 dargestellte Lichthärtgerät 10 weist eine Lichtquelle 12 und eine Steuervorrichtung 14 auf, die in an sich bekannter Weise in einem pistolenförmigen Gehäuse 16 aufgenommen sind.

Vorne aus dem Gehäuse 16 des Lichthärtgeräts 10 erstreckt sich ein Lichtleitstab 18 heraus, der in an sich bekannter Weise an seinem distalen Ende abgekröpft oder gekrümmt ist, um die Lichtbeaufschlagung auch von schlecht zugänglichen Stellen zu ermöglichen.

Das erfindungsgemäße Lichthärtgerät weist ein Auslöseelement 20 auf, das im dargestellten Ausführungsbeispiel in Doppelfunktion arbeitet. Bei diesem Beispiel ist es an der Stelle angeordnet, an der der Abzug einer Pistole angeordnet wäre. Durch Druckbetätigung mit dem Zeigefinger des Benutzers wird das Lichthärtgerät zunächst in einem sogenannten Vorhärtmodus eingeschaltet, in welchem Licht mit einer reduzierten Dosis von der Lichtquelle 12 und damit von dem vorderen Ende des Lichtleitstabs 18 abgegeben wird. Hierbei ist mit Dosis das Produkt aus Leistung und Zeit gemeint, so dass die Lichtabgabe mit einer Dosis erfolgt, die gegenüber der Dosis des Normalhärtmodus vermindert ist.

Wenn beispielsweise im Normalhärtmodus eine Einschaltung der Lichtquelle 12 mit einer Leistung von 4W für 10 Sekunden erfolgt, kann in dem Vorhärtmodus die Lichtabgabe beispielsweise 400mW und ebenfalls 10 Sekunden erfolgen, oder aber - im anderen Extremfall - für lediglich eine Sekunde bei ebenfalls 4W. In beiden Fällen liegt die gleiche reduzierte Dosis vor.

Durch Betätigung des Auslöseelements 20 lässt sich die Lichtquelle 12 einschalten, und zwar in dem dargestellten Ausführungsbeispiel in dem Modus, in dem sich das Lichthärtgerät basierend auf den Informationen, die in der Steuervorrichtung 14 abgelegt sind, befindet. Beispielsweise kann festgelegt sein, dass sich das Lichthärtgerät beim ersten Einschalten im Vorhärtmodus befindet. In diesem Modus wird beim Betätigen des Auslöseelements 20 Licht mit reduzierter Dosis aus dem Lichtleitstab 18 abgegeben.

Diese Lichtabgabe in dem Vorhärtmodus kann durch ein Blinken, einen Farbwechsel oder in beliebiger geeigneter Form signalisiert werden, beispielsweise auch über die in Fig.1 dargestellte Signal-LED 22, die den Vorhärtmodus signalisiert.

Für einen Moduswechsel wird das Auslöseelement 20 in einer beliebigen anderen, jedoch unüblichen Weise betätigt. Hierbei ist es beispielsweise möglich, den Moduswechsel durch Eindrücken des Auslöseelements 20 für mehr als eine Sekunde einzuleiten. Eine andere Möglichkeit besteht darin, den Moduswechsel durch eine kurzzeitige Doppelbetätigung des Auslöseelements 20 einzuleiten. Der Moduswechsel lässt sich auch signalisieren, beispielsweise durch ein entsprechendes Bestätigungsaufleuchten der Signal-LED 22, oder durch eine kurzzeitige Bestätigungs-Lichtabgabe der Lichtquelle 12.

In einer modifizierten Ausgestaltung ist es vorgesehen, die Vorhärtung mit einem separaten Einschaltknopf oder einer sonstigen separaten Einschaltfunktion einzuschalten. Bevorzugt bleibt das Lichthärtgerät auch beim Ausschalten und Ablegen in dem eingestellten Modus.

Alternativ ist es aber auch möglich, beim "Kaltstart" des Lichthärtgeräts stets einen Modus, beispielsweise den Vorhärtmodus, zu wählen, damit in aller Regel stets die Vorhärtung vor der Haupthärtung vorgenommen wird.

Das in Fig.1 dargestellte Lichthärtgerät weist auch einen sogenannten Modus mit erhöhter Leistungsabgabe auf, der durch eine Flashtaste 24 eingeleitet wird. In diesem Modus, der nur in dem Haupthärtmodus zur Verfügung steht, wird kurzzeitig mit sehr hoher Lichtleistung gearbeitet, beispielsweise mit 10 oder 12W, dafür aber nur für einen sehr begrenzten Zeitraum wie 1 Sekunde oder 1,5 Sekunden. Es ist günstig, diese Modus nur durch die Flashtaste freizugeben, um eine etwaige Gesundheitsgefährdung durch Verbrennen bei unbeabsichtigten Einschalten im Modus mit erhöhter Leistungsabgabe zu verhindern.

Es ist auch bevorzugt, der Flashtaste 24 eine echte Tastfunktion zu geben, so dass der Modus mit erhöhter Leistungsabgabe nur dann eingeleitet wird, wenn die Flashtaste 24 tatsächlich während des Betätigens des Auslöseelements 20 niedergedrückt wird. Dieser Modus kann auch zusätzlich optisch signalisiert werden.

Erfindungsgemäß ist es günstig, wenn die Einschaltzeiten im Vorhärtmodus und im Haupthärtmodus unabhängig voneinander eingestellt sind, beziehungsweise programmiert werden können. Wenn die Einstellung der Belichtungszeit im Normalhärtmodus geändert wird, muss dies nicht zur Änderung der Belichtungszeit im Vorhärtmodus führen.

In vorteilhafter Ausgestaltung ist es vorgesehen, einen Sensor, der hier nicht dargestellt ist, so anzubringen, dass er den Zielbereich der Lichtquelle des Lichtleitstabs 18 beaufschlagt. Hiermit lässt sich die ausreichende Lichtbeaufschlagung des Dentalrestaurationsmaterials sowohl im Haupthärtmodus als auch im Vorhärtmodus kontrollieren.

Erfindungsgemäß ist es günstig, wenn zwischen Vorhärtmodus und Haupthärtmodus das Lichthärtgerät ausgeschaltet ist, und insofern gleichsam ein "Modelliermodus" besteht.

Aus Fig.2 ist schematisch ersichtlich, in welcher Weise eine Dentalrestauration aufgebracht werden kann. Eine Kavität 30 wird zunächst mit einer ersten Schicht 32 aus Dentalrestaurationsmaterial in an sich bekannter Weise gefüllt. Diese ist in diesem Zustand zunächst noch flüssig, wenn auch nicht extrem dünnflüssig. Das Lichthärtgerät wird eingeschaltet, und die erste Schicht 32 wird hierdurch von dem flüssigen in einen zähviskosen Zustand überführt. Zugleich erfolgt hierdurch eine minimale Volumenreduktion 34, was einem entsprechenden Niedersinken des Schichtpegels auf seiner Oberseite entspricht. In diesen Zustand ist die Schicht 32 noch gut verformbar und etwas klebrig, so dass sie auch gut an einer weiteren Schicht II anhaftet.

Diese zweite Schicht 36 wird hieran anschließend aufgebracht, wobei sie sich bereits beim Aufbringen gut mit der Härteschicht 32 verbindet.

Hieran anschließend wird auch die zweite Schicht einem Vorhärtmodus unterzogen. In diesem Schritt wird auch die zweite Schicht in einen zäh-viskosen Zustand überführt und bindet sich zugleich enger an die erste Schicht 31.

Hieran anschließend wird das Lichthärtgerät ausgeschaltet oder zumindest von dem Dentalrestaurationsmaterial entfernt. Die Füllung der Kavität 30 mit dem Dentalrestaurationsmaterial wird visuell kontrolliert und es wird gegebenenfalls das Dentalrestaurationsmaterial mit einem hierfür geeigneten Dentalinstrument erneut angedrückt. Hierdurch lassen sich Randspalten sicher vermeiden. Ferner besteht die Möglichkeit, noch eine Umformung der zweiten Schicht oberflächenseitig vorzunehmen, was mit der schraffierten Schichtänderung 40 gemäß Fig. 2 symbolisiert ist. Insofern kann dieser Ruhemodus auch als Modelliermodus bezeichnet werden.

In weiterer modifizierter Ausgestaltung is es vorgesehen, anstelle oder zusätzlich zum Modellieren kurzerhand das überschüssige Material zu entfernen. Dies kann zum Beispiel mittels eines Poliergummis oder eines Fräsers realisiert werden. Nach der Vorhärtung hat das Material oberflächlich eine gewisse Härte, während es noch nicht so hart is, dass eine Überschussentfernung eine aufwendige spanabhebende Bearbeitung erfordert.

Es versteht sich, dass bei Bedarf ein entsprechendes Andrücken und zumindest eine visuelle Kontrolle auch zwischen dem Aufbringen der ersten und der zweiten Schicht realisiert werden kann.

In modifizierter Ausgestaltung ist lediglich eine Schicht vorgesehen. Auch hier kann anschließend an die Aufbringung der Schicht und die Vorhärtung im Vorhärtmodus eine visuelle Kontrolle und gegebenenfalls ein Andrücken und/oder ein Modellieren erfolgen, entsprechend der Schichtänderung 40 gemäß Fig.2.

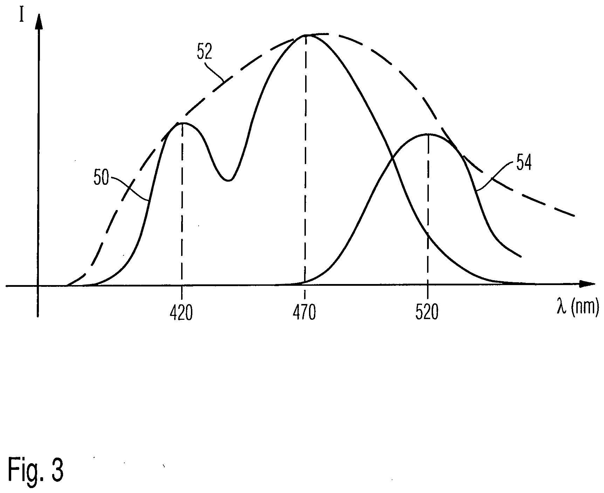

Aus Fig.3 ist ersichtlich, in welcher Weise ein Moduswechsel auch durch eine Farbwechsel der Lichtabgabe der Lichtquelle 12 symbolisiert werden kann. Die Lichtquelle 12, die eine Mehrzahl vom im Wesentlichen nebeneinander angeordneten LED-Chips umfasst, weist ihr Emissionsmaximum bei den meisten Chips bei einer Wellenlänge von 470nm auf. Ein Chip emittiert maximal bei 420nm, so dass sich gemäß Fig. 2 die Kurve 50 der Emission der Lichtquelle 12 im Normalmodus ergibt.

Diese zeigt eine deutliche Überlappung der Empfindlichkeitskurve 52 von Campherchinon, das als Fotoinitiator für polymerisierbares Dentalmaterial gerne verwendet wird.

In der dargestellten Ausführungsform ist ein weiterer Chip mit einem Emissionsmaximum von 520 nm vorgesehen, der dementsprechend ein Emissionsspektrum gemäß der Kurve 54 hat.

Dieser lässt sich nun gegebenenfalls allein für den Vorhärtmodus einschalten, oder bei Bedarf zusammen mit einem der Chips, deren Emissionsmaximum bei 470nm liegt. Hierdurch entsteht eine grünliche Verfärbung des emittierten Lichts, und der Benutzer des Lichthärtgeräts erhält hierdurch eine visuelle Rückkopplung über den eingeschalteten Zustand.

In einer modifizierten Ausgestaltung ist es vorgesehen, die Vorhärtung über das ausschließliche Einschalten eines Licht in der Farbe grün emittierenden Chips zu signalisieren. Damit besteht die Möglichkeit, die Vorhärtung über die Lichtabgabe von blau mit reduzierter Leistung, gegebenenfalls mit einer zusätzlichen Signalisierfunktion wie Blinken oder dergleichen, blau mit etwas Beimischung von grün ausschließlich über grün vorzusehen und zugleich zu realisieren.

Es versteht sich, dass zusätzlich oder an Stelle dessen auch weitere optische Signalisierungen möglich sind, beispielsweise ein Blinken, ein An/Abschwellen der Lichtabgabe im Vorhärtmodus oder auch ein Einschalten der Signal-LED 22, oder beispielsweise ein akustisches Signal.

## Patentansprüche

1. Lichthärtgerät für Dentalrestaurationsmaterialien, mit einer Lichtquelle (12) sowie mit einer Steuervorrichtung (14) für das Lichthärtgerät (10), die in der Lage ist, die Lichtquelle (12) mit unterschiedlichen Leistungen einzuschalten, **dadurch gekennzeichnet, dass** das Lichthärtgerät (10) mindestens einen Vorhärtmodus und einen Haupthärtmodus, in denen das Lichthärtgerät über ein Auslöseelement (20) einschaltbar ist, aufweist, wobei das Lichthärtgerät (10) bei Betätigung des Auslöseelements (20) durch den Benutzer zur Emission einer reduzierten Lichtdosis zum Vorhärten des Dentalrestaurationsmaterials im Vorhärtmodus einschaltbar ist, **dadurch gekennzeichnet, dass** die Steuervorrichtung (14) die reduzierte Lichtdosis über einen Farbwechsel oder ein wiederholtes Ein- und Ausschalten oder Blinken der Lichtquelle (12) signalisiert, und wobei das Lichthärtgerät einen Sensor aufweist, der auf den Zielbereich der Lichtquelle (12) gerichtet ist und mindestens einen physikalischen Parameter des Dentalrestaurationsmaterials während dessen Härtung erfasst.

2. Lichthärtgerät nach Anspruch 1, **dadurch gekennzeichnet, dass** der Sensor als physikalischer Parameter des Dentalrestaurationsmaterials während dessen Härtung dessen Reflexionsgrad und/dessen Verformung erfasst.

3. Lichthärtgerät nach einem der Ansprüche 1 oder 2, **dadurch gekennzeichnet, dass** der Sensor mit der Steuervorrichtung (14) verbunden ist und den Zielbereich der Lichtquelle (12) eines Lichtleitstabes beaufschlagt, so dass eine ausreichende Lichtbeaufschlagung des Dentalrestaurationsteils im Vorhärtmodus und/oder im Normalhärtmodus kontrollierbar ist.

4. Lichthärtgerät nach einem der vorhergehenden Ansprüche, **dadurch gekennzeichnet, dass** die reduzierte Dosis eine reduzierte Zeitdauer aufweist, während welcher das Lichthärtgerät (10) zum Vorhärten eingeschaltet ist, wobei reduziert eine Zeitdauer bedeutet, die zwischen 1 msec und 10 Sekunden, insbesondere 0,1 Sekunden bis 1 Sekunde beträgt.

5. Lichthärtgerät nach einem der vorhergehenden Ansprüche, **dadurch gekennzeichnet, dass** die reduzierte Dosis durch reduzierte Leistungsabgabe der Lichtquelle (12) bereitgestellt ist und dass die reduzierte Leistungsabgabe zwischen 5 mW/cm² bis 500 mW/cm² beträgt.

6. Lichthärtgerät nach einem der vorhergehenden Ansprüche, **dadurch gekennzeichnet, dass** eine Betätigung des Auslöseelements (20) für eine Zeitdauer, die geringer als ein Schwellwert ist, das Lichthärtgerät (10) in dem Vorhärtmodus einschaltet und die Betätigung des Auslöseelements (20) für eine Zeitdauer, die größer als ein Schwellwert ist, in dem Haupthärtmodus einschaltet.

7. Lichthärtgerät nach einem der vorhergehenden Ansprüche, **dadurch gekennzeichnet, dass** ein Vorhärtmodus des Lichthärtgeräts (10) unabhängig von einem Haupthärtmodus einschaltbar und eine Pause zwischen Vorhärtmodus und Haupthärtmodus nach Belieben des Benutzers wählbar ist.

8. Lichthärtgerät nach einem der vorhergehenden Ansprüche, **dadurch gekennzeichnet, dass** das Lichthärtgerät (10) bei Betätigung des Auslöseelements (20) zur Einschaltung des Vorhärtmodus für eine vorgegebene, insbesondere einstellbare, Zeitdauer im Vorhärtmodus mit reduzierter Leistung bleibt.

9. Lichthärtgerät nach einem der vorhergehenden Ansprüche, **dadurch gekennzeichnet, dass** das Lichthärtgerät (10) auch einen schnellen Modus mit einer sehr hohen Leistung von mehr als 5 W pro cm² und einer kurzen Belichtungszeit, insbesondere zwischen 0,1 sek und 2 sek, aufweist, und dass das Lichthärtgerät (10) mindestens im Haupthärtmodus oder im Vorhärtmodus nach einem Wiedereinschalten in den gleichen Modus zurückkehrt.

10. Lichthärtgerät nach einem der vorhergehenden Ansprüche, **dadurch gekennzeichnet, dass** die Einschaltdauer des Haupthärtmodus des Lichthärtgeräts (10) in an sich bekannter Weise einstellbar ist und die Einschaltzeit des Vorhärtmodus beim Einstellen der Belichtungszeit im Haupthärtmodus zusammen mit diesem geändert wird.

11. Lichthärtgerät nach einem der Ansprüche 1 bis 9, **dadurch gekennzeichnet, dass** die Einschaltzeit des Vorhärtmodus unabhängig von der Einstellung der Belichtungszeit im Haupthärtmodus gleich bleibt.

12. Lichthärtgerät nach einem der vorhergehenden Ansprüche, **dadurch gekennzeichnet, dass** das Lichhärtgerät mindestens zwei LED-Chips mit unterschiedlichem Emissionsmaximum aufweist, von denen eines, insbesondere das mit der längeren Wellenlänge des Emissionsmaximum, ausschließlich im Vorhärtmodus des Lichthärtgeräts (10) einschaltbar ist.

13. Lichthärtgerät nach einem der vorhergehenden Ansprüche, **dadurch gekennzeichnet, dass** das Lichthärtgerät (10) mindestens zwei LED-Chips mit Emissionsspektren mit unterschiedlichen Emissionsmaxima aufweist und dass die relative Emissionsintensität bei den Emissionsmaxima zwischen dem Vorhärtmodus und dem Haupthärtmodus geändert, insbesondere vertauscht ist.

14. Lichthärtgerät nach einem der vorhergehenden Ansprüche, **dadurch gekennzeichnet, dass** die Steuervorrichtung (14) die reduzierte Leistung durch abwechselndes Ein- und Ausschalten der Lichtquelle (12), durch einen Farbwechsel dieser, durch eine Zusatz-Lichtquelle (12) und/oder ein akustisches Signal signalisiert und/oder eine zusätzliche Anzeige.

15. Lichthärtgerät nach einem der vorhergehenden Ansprüche, **dadurch gekennzeichnet, dass** das Lichthärtgerät (10) als Handgerät ausgebildet ist und die Steuervorrichtung (14) das Lichthärtgerät bei Aufnahme in die Hand des Benutzers einschaltet und die Erstbetätigung des Auslöseelements (20) das Lichthärtgerät (10) in den Vorhärtmodus mit reduzierter Dosis einschaltet.

16. Lichthärtgerät nach einem der vorhergehenden Ansprüche, **dadurch gekennzeichnet, dass** das Lichthärtgerät (10) nach Beendigung des Vorhärtmodus einen Standby-Modus einnimmt, aus welchem es durch Betätigung des Auslöseelements (20) in den Haupthärtmodus zu einem durch den Benutzer gewählten Zeitpunkt einschaltbar ist.

17. Lichthärtgerät nach einem der vorhergehenden Ansprüche, **dadurch gekennzeichnet, dass** das Auslöseelement (20) mehrere Tasten aufweist, insbesondere eine Taste, über welche der erwünschte Modus ausgelöst wird und eine Bedientaste, über welche ein Modus des Lichthärtgeräts (10) einstellbar ist.

18. Lichthärtgerät nach einem der vorhergehenden Ansprüche, **dadurch gekennzeichnet, dass** eine Zweitbetätigung des Auslöseelements (20) den Vorhärtmodus des Lichthärtgeräts (10) ausschaltet.

## Claims

1. A light curing apparatus for dental restoration materials having a light source (12) as well as a control device (14) for the light curing apparatus (10), which is capable to power up the light source (12) with different outputs, **characterized in that** the light curing apparatus (10) comprises at least one pre-curing mode and a main curing mode, in which the light curing apparatus can be switched on via a trigger element (20), wherein the light curing apparatus (10) can be switched on upon actuation of the trigger element (20) by the user for emitting a reduced light dose to pre-cure the dental restoration material in the pre-curing mode, **characterized in that** the control device (14) indicates the reduced light dose via change of color or repeated switching on and off or flashing the light source (12), and wherein the light curing apparatus comprises a sensor, which is focused onto the target area of the light source (12), and acquiring at least one physical parameter of the dental restoration material during hardening thereof.

2. The light curing apparatus according to Claim 1, **characterized in that** the sensor, as a physical parameter of the dental restoration material during curing thereof, acquires the reflectance und/deformation thereof.

3. The light curing apparatus according to one of the Claims 1 or 2, **characterized in that** the sensor is connected to the control device (14) and biasing the target area of the light source (12) of a light-guiding rod, so that sufficient light exposure of the dental restoration part is controllable in the pre-curing mode and/or in the regular curing mode.

4. The light curing apparatus according to one of the preceding Claims, **characterized in that** the reduced dose has reduced period of time during which the light curing apparatus (10) is turned on for pre-curing, wherein reduced means a period of time which is between 1 ms and 10 s, especially 0,1s to 1 s.

5. The light curing apparatus according to one of the preceding Claims, **characterized in that** the reduced dose is provided by reduced power output of the light source (12), and **in that** the reduced power output is between 5 mW/cm² to 500 mW/cm².

6. The light curing apparatus according to one of the preceding Claims, **characterized in that** actuation of the trigger element (20) for a period of time that is lower than a threshold value, turns on the light curing apparatus (10) in the pre-curing mode and actuation of the trigger element (20) for a period of time that is larger than a threshold value, turns on in the main curing mode.

7. The light curing apparatus according to one of the preceding Claims, **characterized in that** a pre-curing mode of the light curing apparatus (10) can be turned on independently of a main curing mode, and a pause between the pre-curing mode and main curing mode is selectable at the users discretion.

8. The light curing apparatus according to one of the preceding Claims, **characterized in that** the light curing apparatus (10), upon actuation of the trigger element (20) to turn on the pre-curing mode, remains in the pre-curing mode with reduced output for a predetermined, especially adjustable period of time.

9. The light curing apparatus according to one of the preceding Claims, **characterized in that** the light curing apparatus (10) furthermore comprises a fast mode with very high output of more than 5 W per cm2 and very short illumination time, especially between 0,1 s and 2 s, and that the light curing apparatus (10), at least in the main curing mode or in the pre-curing mode, returns into the same mode following reactivation.

10. The light curing apparatus according to one of the preceding Claims, **characterized in that** the switching time of the main curing mode of the light curing apparatus (10) is adjustable in a manner know per se, and the switching time of the pre-curing mode is changed in adjusting the illumination time in the main curing mode, simultaneously with said illumination time.

11. The light curing apparatus according to one of the Claims 1 to 9, **characterized in that** the switching time of the pre-curing mode remains the same independent of adjusting the illumination time in the main curing mode.

12. The light curing apparatus according to one of the preceding Claims, **characterized in that** the light curing apparatus comprises at least two LED chips with different emission maxima, one of which, especially that with the longer wavelength of the emission maximum, can exclusively be turned on in the pre-curing mode of the light curing apparatus (10).

13. The light curing apparatus according to one of the preceding Claims, **characterized in that** the light curing apparatus (10) comprises at least two LED chips with emission spectra having different emission maxima, and that the relative emission intensity is changed, especially is interchanged in the emission maxima between the pre-curing mode and the main curing mode.

14. The light curing apparatus according to one of the preceding Claims, **characterized in that** the control device (14) indicates reduced output by mutually turning on and off the light source (12), by change of color thereof, by an additional light source (12) and/or an acoustic signal und/or additional display.

15. The light curing apparatus according to one of the preceding Claims, **characterized in that** the light curing apparatus (10) is formed as a hand-held apparatus, and the control device (14) turns on the light curing apparatus upon taking up by the user's hand and first actuation of the trigger element (20) turns on the light curing apparatus (10) in the pre-curing mode with reduced dose.

16. The light curing apparatus according to one of the preceding Claims, **characterized in that** the light curing apparatus (10) takes a standby mode after completion of the pre-curing mode, from which, by actuation of the trigger element (20), it can be turned on into the main curing mode at any time selected by the user.

17. The light curing apparatus according to one of the preceding Claims, **characterized in that** the trigger element (20) comprises multiple keys, especially one key, via which the desired mode is initiated and an operating key, via which a mode of the light curing apparatus (10) is adjustable.

18. The light curing apparatus according to one of the preceding Claims, **characterized in that** second actuation of the trigger element (20) turns off the pre-curing mode of the light curing apparatus (10).

## Revendications

1. Dispositif de photopolymérisation pour les matériaux de restauration dentaires, avec une source de lumière (12) ainsi qu'avec un dispositif de commande (14) pour le dispositif de photopolymérisation (10), qui est capable d'activer la source de lumière (12) avec des puissances différentes, **caractérisé en ce que** le dispositif de photopolymérisation (10) dispose d'au moins un mode de durcissement préliminaire et un mode de durcissement principal, dans lesquels le dispositif de photopolymérisation peut être activé par un élément de déclenchement (20), où le dispositif de photopolymérisation (10) lors de l'actionnement de l'élément de déclenchement (20) par l'utilisateur peut être activé pour émettre une dose de lumière réduite pour le durcissement préliminaire des matériaux de restauration dentaire en mode de durcissement préliminaire, **caractérisé en ce que** le dispositif de commande (14) signalise la dose de lumière réduite par un changement de couleur ou une mise sous et hors tension ou un clignotement répétés de la source de lumière (12), et où le dispositif de photopolymérisation dispose d'un capteur, qui est dirigé vers la zone cible de la source de lumière (12) et détecte au moins un paramètre physique du matériau de restauration dentaire lors de son durcissement.

2. Dispositif de photopolymérisation selon la revendication 1, **caractérisé en ce que** la réflectance et la déformation sont détectées comme paramètres physiques du matériau de restauration dentaire par le capteur pendant son durcissement.

3. Dispositif de photopolymérisation selon l'une des revendications 1 ou 2, **caractérisée en ce que** le capteur est relié au dispositif de commande (14) et est exposé à la zone cible de la source de lumière (12) d'un guide de lumière, de sorte qu'une exposition adéquate à la lumière de la pièce de restauration dentaire peut être contrôlée en mode de durcissement préliminaire et en mode de durcissement principal.

4. Dispositif de photopolymérisation selon l'une des revendications précédentes, **caractérisée en ce que** la dose réduite dispose d'un laps de temps réduit, pendant lequel le dispositif de photopolymérisation (10) est allumé pour le durcissement préliminaire, où un laps de temps réduit correspond à un laps de temps entre 1 msec et 10 seconde, en particulier entre 0,1 seconde et 10 secondes.

5. Dispositif de photopolymérisation selon l'une des revendications précédentes, **caractérisé en ce que** la dose réduite est obtenue par la réduction de la puissance de la source de lumière (12) et que la puissance réduite de sortie se situe entre 5 mW/cm² et j 500 mW/cm².

6. Dispositif de photopolymérisation selon l'une des revendications précédentes, **caractérisé en ce qu'**une opération de l'élément de déclenchement (20) pour un laps de temps qui est inférieur à une valeur de seuil, active le dispositif de photopolymérisation (10) en mode de durcissement préliminaire et l'opération de l'élément de déclenchement (20) pour un laps de temps qui est supérieur à une valeur de seuil, active le dispositif de photopolymérisation (10) en mode de durcissement principal.

7. Dispositif de photopolymérisation selon l'une des revendications précédentes, **caractérisé en ce qu'**une mode de durcissement préliminaire du dispositif de photopolymérisation (10) peut être sélectionné indépendamment du mode de durcissement principal et une pause entre le mode de durcissement préliminaire et le mode de durcissement principal peut être choisie au gré de l'utilisateur.

8. Dispositif de photopolymérisation selon l'une des revendications précédentes, **caractérisé en ce que** le dispositif de photopolymérisation (10) reste pendant une période de temps prédéterminée, en particulier réglable en mode de durcissement préliminaire à puissance réduite, en cas d'actionnement de l'élément de déclenchement (20) pour activer le mode de durcissement préliminaire.

9. Dispositif de photopolymérisation selon l'une des revendications précédentes, **caractérisé en ce que** le dispositif de photopolymérisation (10) dispose aussi d'un mode rapide avec une très haute puissance de plus de 5 W par cm2 et un temps d'exposition court, en particulier entre 0,1 secondes et 2 secondes, et que le dispositif de photopolymérisation (10) au moins en mode de durcissement principal ou en mode de durcissement préliminaire retourne dans le même mode après une remise sous tension.

10. Dispositif de photopolymérisation selon l'une des revendications précédentes, **caractérisé en ce que** la durée de fonctionnement du mode de durcissement principal du dispositif de photopolymérisation (10) est réglable de manière connue en soi et la durée de fonctionnement du mode de durcissement préliminaire est réglée lors du réglage du temps d'exposition en mode de durcissement principal et sera modifiée en fonction de celui-ci.

11. Dispositif de photopolymérisation selon l'une des revendications 1 à 9, **caractérisé en ce que** la durée de fonctionnement reste constante en mode de durcissement préliminaire, quel que soit le réglage du temps d'exposition en mode principal de durcissement.

12. Dispositif de photopolymérisation selon l'une des revendications précédentes, **caractérisé en ce que** le dispositif de photopolymérisation dispose d'au moins deux puces LED avec différents maxima d'émission, dont une, en particulier celle avec la longueur d'onde d'émission maximale plus longue, peut être actionnée exclusivement en mode de durcissement préliminaire du dispositif de photopolymérisation (10).

13. Dispositif de photopolymérisation selon l'une des revendications précédentes, **caractérisé en ce que** le dispositif de photopolymérisation (10) dispose d'au moins deux puces LED avec des spectres d'émission avec différents maxima d'émission et que l'intensité relative des émissions aux maxima d'émission entre le mode de durcissement préliminaire et le mode de durcissement principal est changé, en particulier est inversée.

14. Dispositif de photopolymérisation selon l'une des revendications précédentes, **caractérisé en ce que** le dispositif de commande (14) signale la puissance réduite avec la mise en marche et la mise à l'arrêt en alternance de la source de lumière (12), par un changement de couleur de celle-ci, par une source de lumière supplémentaire (12) et/ou un signal acoustique et/ou une indication supplémentaire.

15. Dispositif de photopolymérisation selon l'une des revendications précédentes, **caractérisé en ce que** le dispositif de photopolymérisation (10) est configuré comme dispositif manuel et le dispositif de commande (14) met le dispositif de photopolymérisation sous tension lorsqu'il est pris dans la main de l'utilisateur et l'actionnement initiale de l'élément de déclenchement (20) met le dispositif de photopolymérisation (10) sous tension en mode de durcissement préliminaire à dose réduite.

16. Dispositif de photopolymérisation selon l'une des revendications précédentes, **caractérisé en ce qu'**après l'achèvement du mode de durcissement préliminaire, le dispositif de photopolymérisation (10) assume un mode en veille à partir duquel il peut être basculé en mode de durcissement principal à un moment choisi par l'utilisateur en actionnant l'élément de déclenchement (20).

17. Dispositif de photopolymérisation selon l'une des revendications précédentes, **caractérisé en ce que** l'élément de déclenchement (20) dispose de plusieurs boutons, en particulier un bouton par lequel le mode désiré est déclenché et un bouton de commande, par lequel un mode du dispositif de photopolymérisation (10) peut être réglé.

18. Dispositif de photopolymérisation selon l'une des revendications précédentes, **caractérisé en ce que** l'actionnement de l'élément de déclenchement (20) une deuxième fois arrête le mode de durcissement préliminaire du dispositif de photopolymérisation (10).
